# EUROPEAN PATENT APPLICATION

(11) **EP 0 867 834 A2**
(43) Date of publication of application: **30.09.1998**
(21) Application number: 98200931.8
(22) Date of filing: 26.03.1998
(51) Int. Cl.: G06T 3/00

(54) **Videotechnical processing device**

(30) Priority: 27.03.1997 EP 97105227
(71) Applicant: Philips Patentverwaltung GmbH, 22335 Hamburg (DE); Koninklijke Philips Electronics N.V., 5621 BA Eindhoven (NL)
(72) Inventor: The designation of the inventor has not yet been filed
(74) Representative: Schmalz, Günther, Dipl.-Ing.

(57) **Abstract**

A Videotechnical device, e.g. a telecine comprising a video picture processing device for processing an incoming horizontal pixel data stream capable of processing video pictures with high resolution in real time is proposed comprising a first filter arrangement (2) which is foreseen to filter the incoming data pixel (PIN) stream giving a first filtered data stream; a transposing arrangement (3, 4, 5) which is foreseen to transpose the first filtered data stream into a transposed data stream and a second filter arrangement (6) which is foreseen to filter the transposed data stream giving a second filtered data stream.

## Description

The invention relates to a videotechnical device, e.g. a telecine comprising a video picture processing device for processing an incoming horizontal pixel data stream.

In videotechnical devices for high resolution there is the problem to process the video data in real time without noticable errors like artefacts.

To solve this problem the invention proposes that the video picture processing device comprises a first filter arrangement which is foreseen to filter the incoming data pixel stream giving a first filtered data stream, a transposing arrangement which is foreseen to transpose the first filtered data stream into a transposed data stream and a second filter arrangement which is foreseen to filter the transposed data stream giving a second filtered data stream.

With that arrangement it is possible to process image data of 3 k x 3 k pixels by 10 bit RGBK in realtime. Realtime means in this case processing at a rate of 30 pictures per second. With this arrangement it is possible to zoom, rotate, shear etc. the source picture (linear effects), select a portion of the source area and position the output picture in the destination area. Additionally a key signal for further processing could be generated.

The invention is now described with reference made to the drawings.

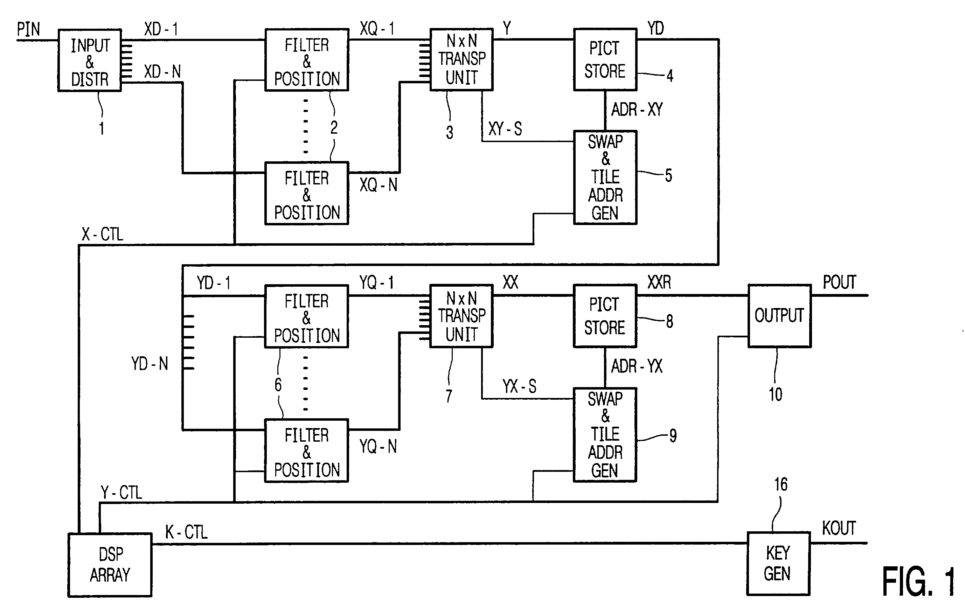

Fig. 1 shows the arrangement of processing devices
Fig. 2 shows the construction of a filter unit
Fig. 3 shows the construction of a key processing device
Fig. 4 shows a digital signal processor arrangement

A incoming horizontal pixel data stream PIN is stored into several units as a complete line in an Input and Distribution unit 1. The Input and Distribution unit 1 splits the stored line into n paralell data strams XD-1 ... XD-N. Those data streams are processed by a first filter arrangement 2. To achieve satisfactory processing time, the first filter arrangement 2 consists of n paralell filter and position units which are described in detail later on. In the first filter arrangement 2 the input picture is processed in vertical direction.

By means of a n x n transpose unit 3 together with a first picture store 4 the complete input picture is transposed then by an adress operation which is performed by a Swap and Tile Address Generator 5. As a mere adress operation would be to slow to transpose the whole picture in real time, the n x n transposing unit 3 is used to deliver small transposed blocks to the picture store 4. In the preferred embodiment n is eight. After transposing the data in the transposing unit 3 it is written in a block of n words into the memory. By the Swap and Tile adress generator 5 the blocks in the picture store 4 are positioned in an order to get a completely transposed image. The outcoming datastreams are processed are fed to a second filter arrangement 6.

The second filter arrangement 6 has the same construction as the first filter arrangement 2. But as the picture was transposed, allthough the processing ist still done linewise, the picture is actually filtered in vertical direction. Afterwards a second transpose unit 7 in connection with a second picture store 8, both devices controlled by a second Swap and Tile Adress Gererator 9 could be used to either transpose or not, depending on the fact whether the display orientation is the same as the input orientation or not. A output unit 10 is used to put the processed datas into a serial output data stream POUT.

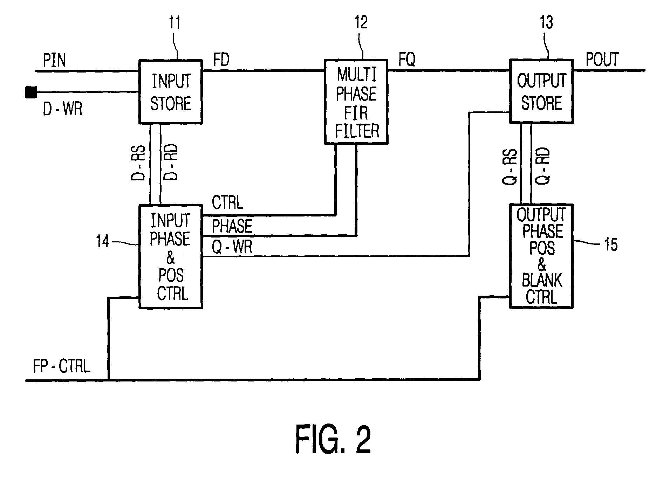

Fig. 2 shows the construction of the filter and position units use in the first and second filter arrangement 2, 6. A filter and position unit consists of an input store holding a line input store 11, a multiphase FIR filter unit 12, an output store 13, an input phase and position controller 14 and an output phase, position and blank controller 15. The input line PIN is first stored in the input store 11 and processed under the control of the input phase and position controller 14. Both controllers can be controlled on a line by line or column by column basis. Therefore it is possible to do superimposed linear effects e.g. rotation. In the preferred embodiment of the rotation, the algorithm of Catmull and Smith 1980 described in Digital Image Warping (IEEE Computer Society Press) is implemented. Eight filter and position units are used in the first filter arrangement 2 as well in the second filter arrangement 6. After passing the multiphase FIR filter 12 the data of each operation unit is stored in the output store 13, under control of the output phase, position and blank controller 15.

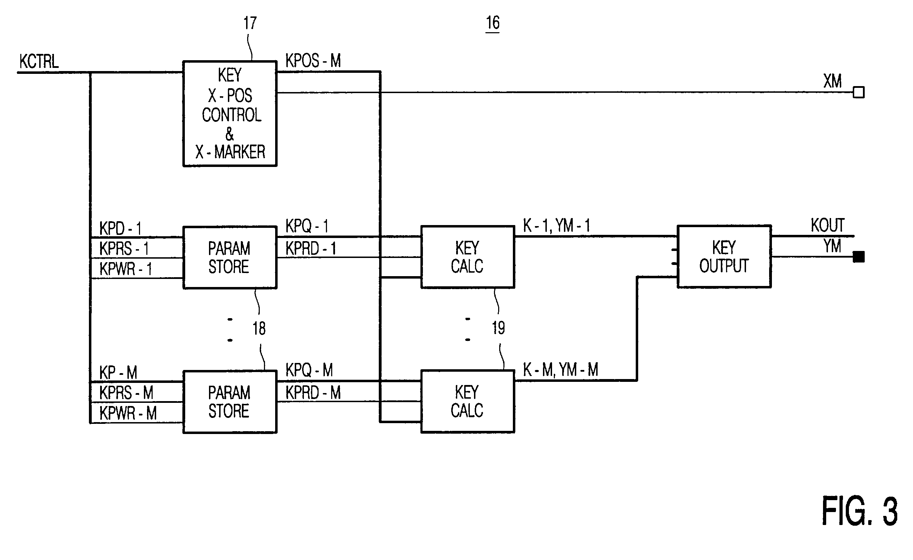

Figure 3 shows the construction of a key generator 16, with a arrangent of key calculating units 19, which are calculating a signal which fits to the generated output picture including the linear effects, so a background can easily be put in. The key calculating units 19 gets control data of a control calculation unit 17 and calculates the transition of the key signal. The control words can change on a line by line basis. The control words are read out of parameter stores 18 and are interpreted as start pixel, end pixel and transition speed and expanded to form the key signal. Several transitions per line are possible. In the preferred embodiment four key calculation units 19 provide the output of the key signal. The key maximum and minimum levels are user selectable and the key is automatically adapted to minimun and maximum, even if wanted and unwanted area changes place. A marker signal is also generated and passed to the picture processing unit using to signalling lines. The control calculation unit 17 consists of an array of DSP processors calculating the parameters for each line. The Key signal generation is also initiated by a DSP processor and calculated by the transition and key generation unit.

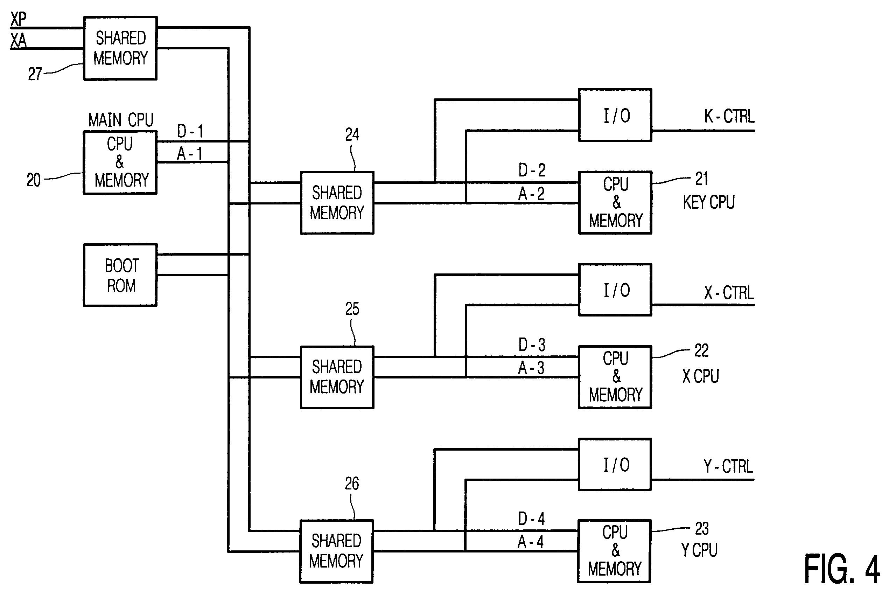

In the prefered embodiment shown in figure 4 the control calculation unit is split into four DSP processors 20, 21, 22, 23 connected to each other by shared memory 24, 25, 26, 27. The first DSP processor 20 calculates all area based information and distributing the results to any of the three other DSP processors 21, 22, 23. Horizontal, vertical and key processing control parameters are each calculated in a separate unit. In the case of rotation, e.g. one DSP calculates control words for the horizontal shear process, one for the vertical shear process and one calculates the resulting rotation key parameters. All parameters are distributed on a serial link to the data processing units. The structure is able to perform superimposed linear effects by changing the program controlling the processing units.

## Claims

1. Videotechnical device, e.g. a telecine comprising a video picture processing device for processing an incoming horizontal pixel data stream
characterized in that
- the video picture processing device comprises a first filter arrangement (2) which is foreseen to filter the incoming data pixel (PIN) stream giving a first filtered data stream;
- a transposing arrangement (3, 4, 5) which is foreseen to transpose the first filtered data stream into a transposed data stream and
- a second filter arrangement (6) which is foreseen to filter the transposed data stream giving a second filtered data stream.

2. Video technical device like in claim 1,
characterized in that
the filter arrangement (2) consists of a certain number (n) of equal filter units in paralell and an input and distribution unit (1) which is foreseen to split the incoming data stream (PIN) into n sub data streams (XD-1 ... XD-N), each sub data stream deliverd to one of the filter units.

3. Video technical device like in claim 1 or 2
characterized in that
the transposing arrangement (3, 4, 5) consists of a transposing unit 3, which is foreseen to transpose a certain number of paralell incoming data streams, writing the tranposed data streams into a picture memory(4) and that a adress generator (5) is foreseen to read out the content of the picture memory (4) to do the rest of the transposition.

4. Video technical device like in claim 1, 2 or 3
characterized in that,
a key generator 16 is foreseen which consists of seperate digital signal processors 19, 20, 21, 22) connected via shared memories (23, 24, 25, 26).

5. Video technical device like in claim 4
characterized in that,
a first digital signal processor (21) is foreseen for horizontal key processing, a second digital signal processor (22) is foreseen for vertical key processing and a third digital signal processor (23) is foreseen for processing control parameters.
